# EUROPÄISCHE PATENTSCHRIFT

(11) **EP 0 724 994 B1**
(45) Veröffentlichungstag und Bekanntmachung des Hinweises auf die Patenterteilung: **13.01.1999**
(21) Anmeldenummer: 95114613.3
(22) Anmeldetag: 16.09.1995
(51) Int. Cl.: B60S 1/56, B05B 1/08, B60S 1/52

(54) **Reinigungsanlage für Scheiben eines Kraftfahrzeugs**
Cleaning system for the glass surfaces of a motor vehicle
Système de nettoyage des vitres d' un véhicule automobile

(30) Priorität: 01.02.1995 DE 19503059
(43) Veröffentlichungstag der Anmeldung: 07.08.1996
(73) Patentinhaber: Mannesmann VDO AG, 60326 Frankfurt (DE)
(72) Erfinder: Horn, Martin, D-36199 Rotenburg (DE); Sieber, Roland, D-36199 Rotenburg (DE)
(74) Vertreter: Klein, Thomas, Dipl.-Ing.

(56) Entgegenhaltungen:
- WO-A-79/00361
- WO-A-80/00927
- US-A- 3 638 866
- US-A- 4 122 845
- US-A- 4 157 161
- US-A- 4 721 251
- PATENT ABSTRACTS OF JAPAN vol. 011, no. 120 (M-580), 15.April 1987 & JP-A-61 261151 (NIPPON SOKEN INC;OTHERS: 01), 19.November 1986,
- PATENT ABSTRACTS OF JAPAN vol. 011, no. 123 (M-581), 17.April 1987 & JP-A-61 263857 (NIPPON SOKEN INC;OTHERS: 01), 21.November 1986,

## Beschreibung

Die Erfindung betrifft gemäß Oberbegriff von Anspruch 1 eine Reinigungsanlage für Scheiben eines Kraftfahrzeugs, wie sie allgemein bekannt ist.

Bei heutigen Kraftfahrzeugen wird häufig zum Zwecke der Reinigung nicht nur auf die Frontscheibe und Heckscheibe, sondern auch auf die Scheiben der vorderen Scheinwerfer Waschflüssigkeit gespritzt. Das Anspritzen der Heckscheibe und der Frontscheibe erfolgt dabei üblicherweise nicht gleichzeitig, sondern wahlweise dadurch, daß eine Pumpe für die Waschflüssigkeit entweder im einen oder anderen Drehsinn läuft. Denkbar wäre es auch, hinter der Pumpe als Flüssigkeitsverteiler ein elektrisch umschaltbares Zweiwegeventil anzuordnen, um nicht an allen Spritzventilen gleichzeitig zu spritzen, was jedoch beträchtlichen Aufwand bedingen würde. Das nicht gleichzeitige Spritzen hat den Vorteil, daß die Pumpenleistung nur für diejenigen Spritzdüsen bemessen sein muß, durch welche gleichzeitig Waschflüssigkeit spritzen soll. Insbesondere für das Anspritzen der Scheiben von Scheinwerfern ist es vorteilhaft, wenn dieses mit möglichst hohem Druck erfolgt, weil oftmals die Reinigung solcher Scheinwerferscheiben allein durch Anspritzen und nicht zusätzlich durch die Arbeit von Wischern erfolgen muß.

Dem Dokument US-A-4 157 161 ist eine Reinigungsanlage für Scheiben von Kraftfahrzeugen entnehmbar, bei der ein Fluidik-Oszillator die Waschflüssigkeit unmittelbar auf die Windschutzscheibe sprüht.

Der Erfindung liegt das Problem zugrunde, eine Reinigungsanlage der eingangs genannten Art so zu gestalten, daß verschiedenen Spritzdüsen nacheinander Waschflüssigkeit zugeführt wird.

Dieses Problem wird erfindungsgemäß dadurch gelöst, daß der Flüssigkeitsverteiler ein Fluidik-Element mit einem Flüssigkeitsstrahl ist, welcher durch in ihrer Stärke wechselnde Randwirbel zu beiden Seiten des Flüssigkeitsstrahls abwechselnd zur einen oder anderen Seite hin abgelenkt wird und daß die Flüssigkeitsauslässe in einem von dem pendelnden Flüssigkeitsstrahl zeitweilig erreichten Bereich des Flüssigkeitsverteilers liegen.

Bei einer solchen Reinigungsanlage werden die an einem Flüssigkeitsverteiler angeschlossenen Spritzdüsen nicht gleichzeitig, sondern abwechselnd mit Waschflüssigkeit versorgt. Dieser Wechsel, welcher mit hoher Frequenz erfolgen kann, geschieht völlig selbsttätig, ohne daß es mit elektrischer Energie zu versorgender Steuermittel oder mechanischer Umschalteinrichtungen bedarf. Da aus verschiedenen Spritzdüsen nicht gleichzeitig gespritzt wird, läßt sich mit einer relativ geringen Pumpenleistung ein hoher Spritzdruck erreichen, was dazu führt, daß sich die Richtung des Spritzstrahls durch den mit der Geschwindigkeit des Kraftfahrzeugs wechselnden Fahrwind wenig verändert und auch bei Scheiben ohne Wischer eine gute Reinigungswirkung sichergestellt ist.

Der Flüssigkeitsverteiler ist besonders einfach gestaltet, wenn er gemäß einer vorteilhaften Weiterbildung der Erfindung eine Flüssigkeitsstrahlkammer hat, welche an einer Seite den Flüssigkeitseinlaß und an einer gegenüberliegenden Seite die Flüssigkeitsauslässe aufweist und wenn zur wechselnden Ausrichtung des Flüssigkeitsstrahls von einem Flüssigkeitsauslaß zum anderen an jeder Seite der Flüssigkeitsstrahlkammer in der Ebene der Flüssigkeitsauslässe jeweils eine Rückströmleitung von der Auslaßseite zur Einlaßseite der Flüssigkeitsstrahlkammer führt.

Vorteilhaft ist es auch, wenn die beiden Flüssigkeitsauslässe mit jeweils einer Spritzdüse für die Scheibe eines Scheinwerfers eines Kraftfahrzeugs verbunden sind. Hierdurch wird nicht, wie bei Scheinwerferreinigungsanlagen bisher üblich, gegen die Scheiben eines rechten und linken Scheinwerfers gleichzeitig, sondern abwechselnd gespritzt. Zusätzlich zu dem bereits genannten Effekt, daß sich dadurch bei vorgegebener Pumpenleistung höhere Spritzdrücke erzielen lassen, hat das den Vorteil, daß die Lichtausbeute beider Scheinwerfer nicht durch gleichzeitiges Benetzen beider Scheinwerferscheiben gleichzeitig verringert wird.

Eine andere vorteilhafte Ausbildung der Erfindung besteht darin, daß die beiden Flüssigkeitsauslässe mit jeweils einer von zwei Spritzdüsen einer Frontscheibe oder Heckscheibe eines Kraftfahrzeugs verbunden sind. Hierdurch spritzen die beiden Spritzdüsen beispielsweise der Frontscheibe nicht gleichzeitig, sondern alternierend. Dabei kann die Frequenz des Wechsels zwischen dem Spritzen aus der einen und anderen Spritzdüse so hoch gewählt werden, daß dem Benutzer dieser Wechsel nicht auffällt und für den Beobachter aus beiden Spritzdüsen gleichzeitig Waschflüssigkeit spritzt, so daß nicht ein Scheibenwischerblatt über einen noch trockenen Scheibenbereich wischen muß.

Die Erfindung läßt zahlreiche Ausführungsformen zu. Zur weiteren Verdeutlichung ihres Grundprinzips ist eine davon stark schematisch in der Zeichnung dargestellt und wird nachfolgend beschrieben.

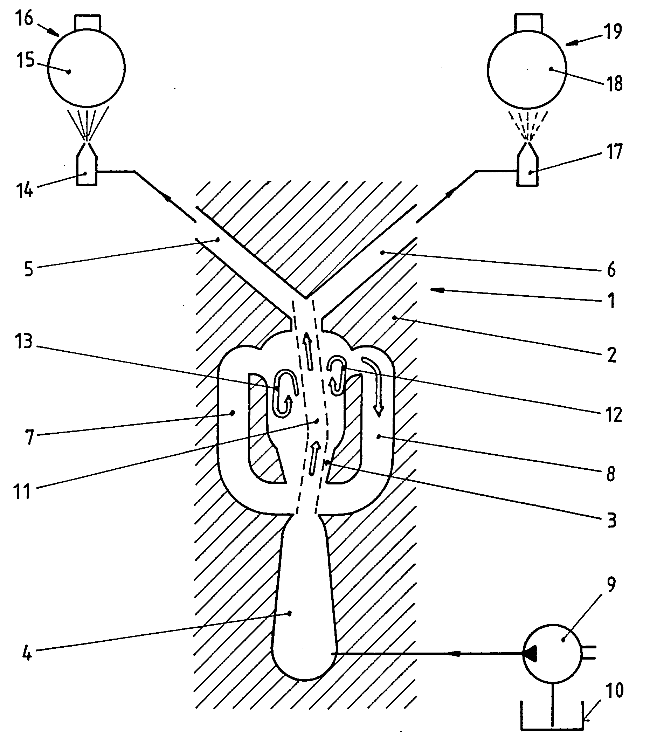

Die Figur 1 zeigt einen als Fluidik-Element ausgebildeten Flüssigkeitsverteiler 1, welcher in einem Gehäuse 2 eine Flüssigkeitsstrahlkammer 3 hat. In diese Flüssigkeitsstrahlkammer 3 mündet von einer Seite her ein Flüssigkeitseinlaß 4. Ihm gegenüber sind zwei Flüssigkeitsauslässe 5, 6 angeordnet. Symmetrisch zueinander führen in der Ebene der Flüssigkeitsauslässe 5, 6 zwei Rückströmleitungen 7, 8 von der Auslaßseite zur Einlaßseite der Flüssigkeitsstrahlkammer 3.

Der Flüssigkeitseinlaß 4 ist mit einer Pumpe 9 verbunden, welche aus einem Behälter 10 Waschflüssigkeit in die Flüssigkeitsstrahlkammer 3 fördert. Diese durchströmt die Flüssigkeitsstrahlkammer 3 mit einem Flüssigkeitsstrahl 11 derart, daß zu beiden Seiten des Flüssigkeitsstrahls 11 Randwirbel 12, 13 entstehen, deren Stärke ständig wechselt und die zu wechselnden Rückströmungen in den Rückströmleitungen 7, 8 führen. Das hat zur Folge, daß der Flüssigkeitsstrahl 11 abwechselnd zum Flüssigkeitsauslaß 5 oder 6 hin gerichtet wird, daß er also zwischen zwei Endlagen pendelt.

Am Flüssigkeitsauslaß 5 ist beispielsweise eine Spritzdüse 14 einer Scheibe 15 eines Scheinwerfers 16 angeschlossen, während der Flüssigkeitsauslaß 6 zu einer entsprechenden Spritzdüse 17 einer Scheibe 18 eines Scheinwerfers 19 führt. Durch diese Gestaltung ergibt es sich, daß beim Arbeiten der Pumpe 9 Waschflüssigkeit immer abwechselnd gegen die Scheibe 15 oder 18 spritzt.

## Patentansprüche

1. Reinigungsanlage für Scheiben eines Kraftfahrzeugs, welche über einen Flüssigkeitsverteiler (1) mit Waschflüssigkeit versorgte Spritzdüsen (14, 17) aufweist und bei der der Flüssigkeitsverteiler einen an eine Flüssigkeitspumpe (9) anzuschließenden Flüssigkeitseinlaß (4) und zumindest zwei Flüssigkeitsauslässe (5, 6) hat, **dadurch gekennzeichnet**, daß der Flüssigkeitsverteiler (1) ein Fluidik-Element mit einem Flüssigkeitsstrahl (11) ist, welcher durch in ihrer Stärke wechselnde Randwirbel (12, 13) zu beiden Seiten des Flüssigkeitsstrahls (11) abwechselnd zur einen oder anderen Seite hin abgelenkt wird und daß die Flüssigkeitsauslässe (5, 6) in einem von dem pendelnden Flüssigkeitsstrahl (11) zeitweilig erreichten Bereich des Flüssigkeitsverteilers (1) liegen.

2. Reinigungsanlage nach Anspruch 1, **dadurch gekennzeichnet**, daß sie eine Flüssigkeitsstrahlkammer (3) hat, welche an einer Seite den Flüssigkeitseinlaß (4) und an einer gegenüberliegenden Seite die Flüssigkeitsauslässe (5, 6) aufweist und daß zur wechselnden Ausrichtung des Flüssigkeitsstrahls (11) von einem Flüssigkeitsauslaß (5, 6) zum anderen an jeder Seite der Flüssigkeitsstrahlkammer (3) in der Ebene der Flüssigkeitsauslässe (5, 6) jeweils eine Rückströmleitung (7, 8) von der Auslaßseite zur Einlaßseite der Flüssigkeitsstrahlkammer (3) führt.

3. Reinigungsanlage nach den Ansprüchen 1 oder 2, **dadurch gekennzeichnet**, daß die beiden Flüssigkeitsauslässe (5, 6) mit jeweils einer Spritzdüse (14, 17) für die Scheibe (15, 18) eines Scheinwerfers (16, 19) eines Kraftfahrzeugs verbunden sind.

4. Reinigungsanlage nach den Ansprüchen 1 oder 2, **dadurch gekennzeichnet**, daß die beiden Flüssigkeitsauslässe (5, 6) mit jeweils einer von zwei Spritzdüsen (14, 17) einer Frontscheibe oder Heckscheibe eines Kraftfahrzeugs verbunden sind.

## Claims

1. Cleaning system for windows on a motor vehicle, said system featuring spray nozzles (14, 17) supplied with wash fluid via a fluid distributor (1) and wherein the fluid distributor has a fluid inlet (4) for connection to a fluid pump (9) and at least two fluid outlets (5, 6), **characterised in that** the fluid distributor (1) is a fluid logics element having a jet of fluid (11) which is deflected alternately towards one or the other side by peripheral vortices (12, 13) of changing intensity on both sides of the jet of fluid (11), and that the fluid outlets (5, 6) are situated in a zone of the fluid distributor (1) that is at times reached by the jet of fluid (11) as it travels back and forth.

2. Cleaning system according to claim 1, **characterised in that** it has a fluid jet chamber (3) which features the fluid inlet (4) on one side and the fluid outlets (5, 6) on an opposing side, and that for alternating alignment of the jet of fluid (11) from one fluid outlet (5, 6) to the other a respective backflow line (7, 8) runs in the plane of the fluid outlets (5, 6) from the outlet side to the inlet side of the fluid jet chamber (3).

3. Cleaning system according to claims 1 or 2, **characterised in that** the two fluid outlets (5, 6) are respectively connected to a spray nozzle (14, 17) for the lens (15, 18) of a motor vehicle headlamp (16, 19).

4. Cleaning system according to claims 1 or 2, **characterised in that** the two fluid outlets (5, 6) are respectively connected to one of two spray nozzles (14, 17) of a windshield or rear window on a motor vehicle.

## Revendications

1. Système de nettoyage des vitres d'un véhicule automobile, qui présente des buses de projection (14, 17) alimentées en liquide de lavage par l'intermédiaire d'un distributeur de liquide (1) et dans le cas duquel le distributeur de lavage a une entrée de liquide (4) à raccorder à une pompe de liquide (9) et au moins deux sorties de liquide (5, 6), caractérisé par le fait que le distributeur de liquide (1) est un élément fluidique avec un jet de liquide (11) qui, par suite de son tourbillon de bordure (12, 13) d'intensité alternativement changeante des deux côtés du jet de liquide (11) est alternativement dévié vers l'un ou l'autre côté et que les sorties de liquide (5, 6) se trouvent dans une zone du distributeur de liquide (1) temporairement atteinte par le jet pendulaire de liquide (11).

2. Système de nettoyage selon la revendication 1, caractérisé par le fait qu'il a une chambre de jet de liquide (3) qui présente d'un côté l'entrée de liquide (4) et d'un côté opposé les sorties de liquide (5, 6) et qu'en correspondance avec l'orientation alternée du jet de liquide (11) d'une sortie de liquide (5, 6) a, l'autre, de chaque côté de la chambre de jet de liquide (3), dans le plan des sorties de liquide (5, 6), une conduite de reflux (7, 6) conduit chaque fois du côté sortie au côté entrée de la chambre de jet de liquide (3).

3. Système de nettoyage selon la revendication 1 ou 2, caractérisé par le fait que chacune des deux sorties de liquide (5, 6) est reliée à une buse de projection (14, 7) pour la vitre (15, 18) d'un phare (16, 19) d'un véhicule automobile.

4. Système de nettoyage selon la revendication 1 ou 2, caractérisé par le fait que chacune des deux sorties de liquide (5, 6) est reliée à l'une des deux buses de projection (14, 17) d'un parebrise ou d'une vitre arrière d'un véhicule automobile.
